(19) Europäisches Patentamt / European Patent Office / Office européen des brevets

(11) EP 3 865 334 A1

(12) **EUROPEAN PATENT APPLICATION**
published in accordance with Art. 153(4) EPC

(43) Date of publication:
18.08.2021 Bulletin 2021/33

(51) Int Cl.:
*B60L 9/18* (2006.01)    *B60L 1/00* (2006.01)
*B60M 3/02* (2006.01)

(21) Application number: 19871438.8

(22) Date of filing: 26.09.2019

(86) International application number:
PCT/JP2019/037836

(87) International publication number:
WO 2020/075510 (16.04.2020 Gazette 2020/16)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.10.2018 JP 2018193905

(71) Applicant: Hitachi, Ltd.
Tokyo 100-8280 (JP)

(72) Inventors:
• KIMURA, Shota
  Tokyo 100-8280 (JP)
• MIYAUCHI, Tsutomu
  Tokyo 100-8280 (JP)
• TAKAHASHI, Hirotaka
  Tokyo 100-8280 (JP)

(74) Representative: Mewburn Ellis LLP
Aurora Building
Counterslip
Bristol BS1 6BX (GB)

(54) **RAIL VEHICLE AND POWER CONTROL METHOD FOR RAIL VEHICLE**

(57) A rail-to-ground voltage is appropriately controlled in a DC feeder system. A railroad vehicle which is operated by power supplied from power supply equipment includes a power control system which takes in information on a ground voltage of a rail at a target position as one of parameters and executes power control based on the information. The railroad vehicle further includes at least one of a drive device supplied with power controlled by the power control system and an auxiliary device supplied with power controlled by the power control system.

FIG. 1

## Description

Technical Field

The present invention relates to a railroad vehicle.

Background Art

In an electric railway, a circuit is configured so that current supplied from a substation is consumed by a train and then returned to a substation via a rail. In this case, the product of a resistance value of a rail and current (hereinafter referred to as return current) flowing through the rail causes a potential difference between a vicinity of a substation and a vicinity of a train. Generally, a rail is treated to be insulated from the ground from the viewpoint of preventing electrolytic corrosion, but complete insulation treatment is not possible and some current leakage occurs. As a result, a rail-to-ground voltage, which is a potential difference between a rail and the ground, increases in a negative direction near the substation and the rail-to-ground voltage increases in a positive direction near the train. Since the resistance value of the rail increases in proportion to a length of the rail, an absolute value of the rail-to-ground voltage increases as a distance between the substation and the train increases. Also, a height of the absolute value of the rail-to-ground voltage is proportional to the current flowing through the rail. Therefore, the absolute value of the rail-to-ground voltage becomes high when there are many trains between substations or when there is a train which consumes a large amount of current. When the absolute value of the rail-to-ground voltage becomes extremely high, a high voltage will be applied to a pad for electrically insulating a track circuit of a signal, which may shorten the lifespan.

However, usually at a design stage, the number of trains in operation and the current consumption are taken into consideration and the number of substations installed is determined with a margin at intervals to shorten a distance through which a large current flows, in such a manner that the absolute value of the rail-to-ground voltage is kept within a certain range.

However, when the number of trains between substations increases sharply due to disruption of timetables, a larger amount of return current may flow than usual, and thus the absolute value of the rail-to-ground voltage may rise excessively. Also, for example, even when the substation fails and the substation interval increases, the distance between the train and the substation may become extremely large, and thus the absolute value of the rail-to-ground voltage may rise excessively. Assuming this situation, it can be solved by increasing the number of substations and shortening the interval, but it will lead to a significant increase in cost, resulting in a large economic loss.

As technique to reduce the absolute value of the rail-to-ground voltage without increasing the substation, JP-A-2003-260963 (PTL 1) proposes the following technique. In an AT feeding electric wire system, the absolute value of the rail-to-ground voltage is reduced by grounding the rail with low resistance by utilizing a reinforcing bar of a structure such as an impedance bond point and a viaduct.

Citation List

Patent Literature

PTL 1: JP-A-2003-260963

Summary of Invention

Technical Problem

The technique described in PTL 1 suppresses an excessive increase in the absolute value of the rail-to-ground voltage by grounding the rail with low resistance in a railway line electrified by an AC feeder system. However, this technique is effective in a railroad vehicle drive system for an AC feeder system in which train current is generally smaller than that of the DC feeder system and a direction of the current changes. Therefore, the technique described in PTL 1 cannot be applied to a DC-feeder-type railroad vehicle drive system. When the technique described in PTL 1 can be applied to a DC-feeder-type railroad vehicle drive system, in the DC feeder system, the train current is large and the direction of the current does not change, so a large amount of current (hereinafter, stray current) may flow to the ground, and thus this may cause electrolytic corrosion of a buried tube.

In a recent year, it has been desired to prevent the rail-to-ground voltage from rising excessively based on international standards and a method for appropriately managing the rail-to-ground voltage at low cost is desired.

In order to solve this problem, it is an object of the invention to appropriately control the rail-to-ground voltage in the DC feeder system.

Solution to Problem

A railroad vehicle which is operated by power supplied from power supply equipment includes a power control system which takes in information on a ground voltage of a rail at a target position as one of parameters and executes power control based on the information. The railroad vehicle further includes at least one of a drive device supplied with power controlled by the power control system and an auxiliary device supplied with power controlled by the power control system.

Advantageous Effects of Invention

According to the invention, the rail-to-ground voltage can be appropriately controlled in the DC feeder system.

Brief Description of Drawings

[Fig. 1] Fig. 1 is a schematic configuration diagram of a power control system for a railroad vehicle according to a first example.
[Fig. 2]Fig. 2 is a diagram illustrating an example of usage current limit command information in the first example.
[Fig. 3]Fig. 3 is a diagram illustrating an example of an internal configuration of a rail-to-ground voltage acquisition unit in the first example.
[Fig. 4]Fig. 4 is a diagram illustrating an example of an electrical connection model between a rail and the ground.
[Fig. 5]Fig. 5 is a diagram illustrating an example of a return current path and a rail-to-ground voltage.
[Fig. 6]Fig. 6 is a diagram illustrating an example of a rail-to-ground voltage on the ground having different leakage conductances.
[Fig. 7]Fig. 7 is a diagram illustrating an example of rail-to-ground voltage calculation of the rail-to-ground voltage acquisition unit in the first example.
[Fig. 8]Fig. 8 is a diagram illustrating an example of internal processing of an energy management unit in the first example.
[Fig. 9]Fig. 9 is a diagram illustrating an example of an internal configuration of step 503, which is internal processing of the energy management unit in the first example.
[Fig. 10]Fig. 10 is a diagram illustrating an example of power limit distribution according to a power limit amount in the first example.
[Fig. 11]Fig. 11 is a schematic configuration diagram of a railroad vehicle drive system according to a second example.
[Fig. 12]Fig. 12 is a diagram illustrating an example of an internal configuration of a rail-to-ground voltage acquisition unit in the second example.
[Fig. 13]Fig. 13 is a diagram illustrating an example of rail-to-ground voltage calculation of the rail-to-ground voltage acquisition unit in the second example.
[Fig. 14]Fig. 14 is a diagram illustrating an example of internal processing of an energy management unit in the second example.
[Fig. 15]Fig. 15 is a diagram illustrating an example of a rail-to-ground voltage reference value at an arbitrary position in the second example.
[Fig. 16]Fig. 16 is a schematic configuration diagram of a railroad vehicle drive system according to a third example.

example .
[Fig. 17]Fig. 17 is a diagram illustrating an example of an internal configuration of a rail-to-ground voltage acquisition unit in the third example.
[Fig. 18]Fig. 18 is a diagram illustrating an example of feeder-related information in the third example.
[Fig. 19]Fig. 19 is a diagram illustrating an example of own vehicle electric power information in the third example.
[Fig. 20]Fig. 20 is a diagram illustrating an example of rail-to-ground voltage calculation of the rail-to-ground voltage acquisition unit in the third example.
[Fig. 21]Fig. 21 is a schematic configuration diagram of a railroad vehicle drive system according to a fourth example.
[Fig. 22]Fig. 22 is a diagram illustrating an example of internal processing of an energy management unit in the fourth example.
[Fig. 23]Fig. 23 is a schematic configuration diagram of a railroad vehicle drive system according to a fifth example.
[Fig. 24]Fig. 24 is a diagram illustrating an example of internal processing of an energy management unit in the fifth example.
[Fig. 25]Fig. 25 is a schematic configuration diagram of a railroad vehicle drive system according to a sixth example .
[Fig. 26]Fig. 26 is a diagram illustrating an example of internal processing of energy management means in the sixth example.

Description of Embodiments

Hereinafter, some examples of the invention will be described with reference to the drawings.
In a following description, a function may be described by expression "xxx unit". However, the function may be realized by executing one or more computer programs by one or more processors, or may be realized by one or more hardware circuits (for example, Field-Programmable Gate Array (FPGA) or Application Specific Integrated Circuit (ASIC)). The description of each function is an example, and a plurality of functions may be combined into one function, or one function may be divided into a plurality of functions.
Further, in the following description, the "railroad vehicle" is an N-car train (N is a natural number).

First Example

[Configuration of Railroad Vehicle Drive System]

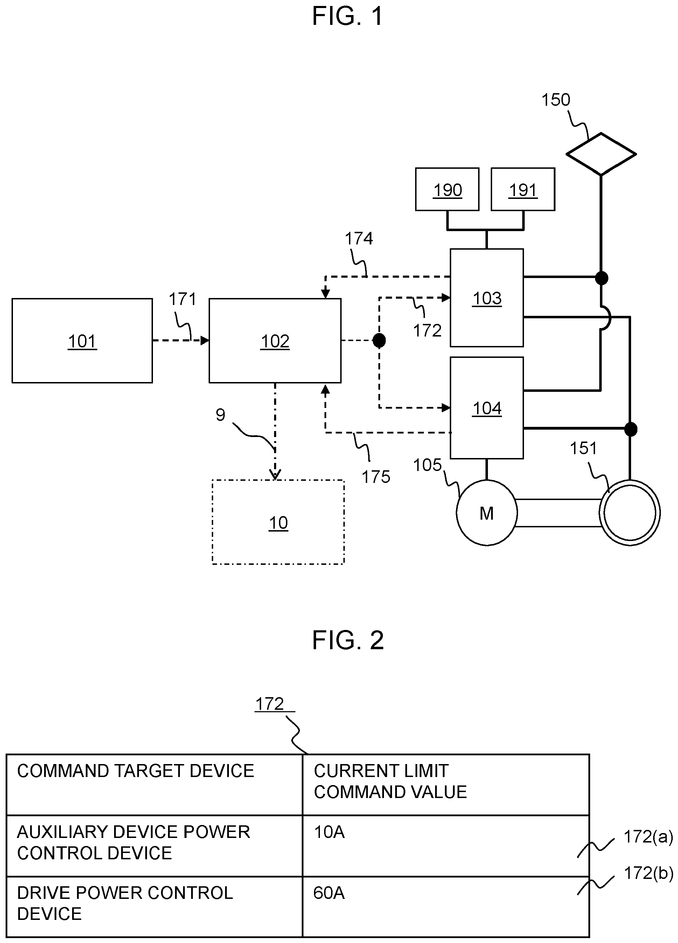

Fig. 1 is a schematic configuration diagram of a power control system for a railroad vehicle according to a first example.
A power control system for the railroad vehicle illustrated in Fig. 1 includes a rail-to-ground voltage acquisition unit 101, an energy management unit 102, an auxiliary device power control device 103, a drive power control device 104, an electric motor 105, a current collector 150, and a wheel 151. In this power control system, power is supplied from a power supply facility such as a substation via a DC overhead line (hereinafter, overhead line) and the current collector 150. The auxiliary device power control device 103 and the drive power control device 104 are examples of power control devices which control the power consumption of the load. Therefore, the power control system in this example has the energy management unit 102 as a higher-level system, and the auxiliary device power control device 103 and the drive power control device 104 as lower-level systems of the energy management unit 102. Further, in the following description, the "own vehicle" means a railroad vehicle equipped with the power system.

The rail-to-ground voltage acquisition unit 101 acquires a rail-to-ground voltage near the position of the own vehicle and outputs rail-to-ground voltage-related information 171 including information indicating the acquired rail-to-ground voltage to the energy management unit 102. The configuration and processing of the rail-to-ground voltage acquisition unit 101 will be described below.

The energy management unit 102 takes in at least the rail-to-ground voltage-related information 171 output from the rail-to-ground voltage acquisition unit 101 as one of the parameters, and then the energy management unit 102 calculates a power control command for the lower system based on the information 171. Also, in this calculation, an auxiliary power usage status 174, which is information (information indicating a usage status (for example, a value of the current used) of an air conditioner 190 and a lighting device 191 which are examples of auxiliary devices) output from the auxiliary device power control device 103 and a drive power usage status 175, which is information (information indicating the power usage status (for example, the value of the current used) of the drive device) output from the drive power control device 104 are respectively acquired as input information.

The energy management unit 102 outputs usage current limit command information 172, which is information for commanding the limitation of the power used (current used in this example), to the auxiliary device power control device 103 and the drive power control device 104, based on the input information 171, 174, and 175. The details of processing of the energy management unit 102 and the usage current limit command information 172 will be described below. In addition, the usage current limit command information 172 is an example of command information for a power control device such as at least one of the auxiliary device power control device 103 and the drive power control device 104 and indicates magnitude of the current value to be reduced.

The auxiliary device power control device 103 converts the electric power supplied by an electric circuit composed between the current collector 150 and the wheel 151 into a voltage and current suitable for the air conditioner 190 and the lighting device 191. Each of the air conditioner 190 and the lighting device 191 is an example of an auxiliary device. An "auxiliary device" is a device (for example, service equipment) other than a drive device such as the main electric motor 105. The auxiliary device power control device 103 compares a current limit command value (upper limit value of the current permitted to be used) for an auxiliary device indicated by the usage current limit command information 172 output from energy management unit 102 with an auxiliary device usage current value (the current value of the auxiliary device currently in use, which is indicated by the auxiliary power usage status 174). When it is determined that the power load needs to be reduced for at least one of the air conditioner 190 and the lighting device 191 (when the auxiliary device usage current value exceeds the current limit command value), the auxiliary device power control device 103 controls the power so that the usage power of at least one of the air conditioner 190 or the lighting device 191 is reduced. The auxiliary device power control device 103 may use a static inverter, which has become the mainstream in recent trains, or may use an electric generator in which an electric motor and a generator are directly connected. When the air conditioner 190 or the lighting device 191 is individually equipped with a power control function, a method of directly issuing a command to limit the power to the air conditioner 190 or the lighting device 191 may be used and any means may be used as long as the electric power of the air conditioner 190 or the lighting device 191 can be controlled. The current limit command value may be a command value for a current limit amount. In that case, the auxiliary device power control device 103 may perform power control such that the auxiliary device usage current value is lowered by the current limit command value instead of comparing the current limit command value with the auxiliary device usage current value.

The drive power control device 104 converts the electric power supplied by the electric circuit composed between the current collector 150 and the wheel 151 into a current and voltage suitable for driving the main electric motor 105. Although the drive power control device 104 basically outputs drive power which changes depending on the vehicle speed, the driving operation, and the like, the drive power control device 104 compares the current limit command value for drive equipment indicated by the usage current limit command information 172 output from the energy management unit 102 with a drive usage current value (value of the current currently in use of the main electric motor 105, which is indicated by the drive power usage status 175). When it is determined that the power load needs to be reduced for the main electric motor 105 (when the drive usage current value exceeds the current limit command value), the drive power control device 104 limits the power for driving the main electric motor 105 to be small. The drive power control device 104 may use an inverter control method which has been the mainstream in recent years, or may use a field chopper control method, a field addition excitation control method, a resistance control method, or the like, and also, any means may be used as long as the electric power of the main electric motor 105 can be controlled. The current limit command value may be a command value for the current limit amount. In that case, the drive power control device 104 may perform power control so that the drive usage current value is lowered by the current limit command value instead of comparing the current limit command value with the auxiliary device usage current value.

According to this example, based on the rail-to-ground voltage-related information 171 including information indicating the rail-to-ground voltage (rail-to-ground voltage near the position of the own vehicle) acquired by the rail-to-ground voltage acquisition unit 101, the current limit command value of the auxiliary device power control device 103 and the drive power control device 104 is determined by the energy management unit 102, and based on the usage current limit command information 172 which includes the determined current limit command value, the usage power is controlled by the auxiliary device power control device 103 and the drive power control device 104. The controlled usage power affects the rail-to-ground voltage near the own vehicle position. According to the configuration of this example, it is possible to prevent the rail-to-ground voltage near the position of the own vehicle from rising excessively.

As illustrated by the alternate long and short dash line, the energy management unit 102 generates notification information 9 indicating an own vehicle status as a predicted or actual result of control according to the usage current limit command information 172, and then the energy management unit 102 may output the generated notification information 9 to an external device 10 outside the drive system. The notification information 9 may be at least one of control result information (for example, set temperature and humidity of air conditioning) of an auxiliary device such as the air conditioner 190 and control result information (for example, vehicle speed) of drive equipment. The external device 10 may be, for example, a display device provided in a driver's cab of the own vehicle (that is, the notification information 9 may be displayed on the display device by the energy management unit 102), or may be a management center. As a result, a crew member (for example, a driver) of the own vehicle or an operation manager can grasp the own vehicle status as a result of the control.

Fig. 2 is a diagram illustrating an example of the usage current limit command information 172.

In the usage current limit command information 172, power limit command values are set for each of the auxiliary device power control device 103 and the drive power control device 104. In Fig. 2, the auxiliary device power control device 103 is set with an auxiliary device current limit command value 172(a) and the drive power control device 104 is set with a drive current limit command value 172(b). However, the current limit command value may be set only for power control devices which require a limit. Each of the command values 172 (a) and 172 (b) corresponds to the target current value after the current limitation.

[Rail-to-ground Voltage Acquisition Unit 101]

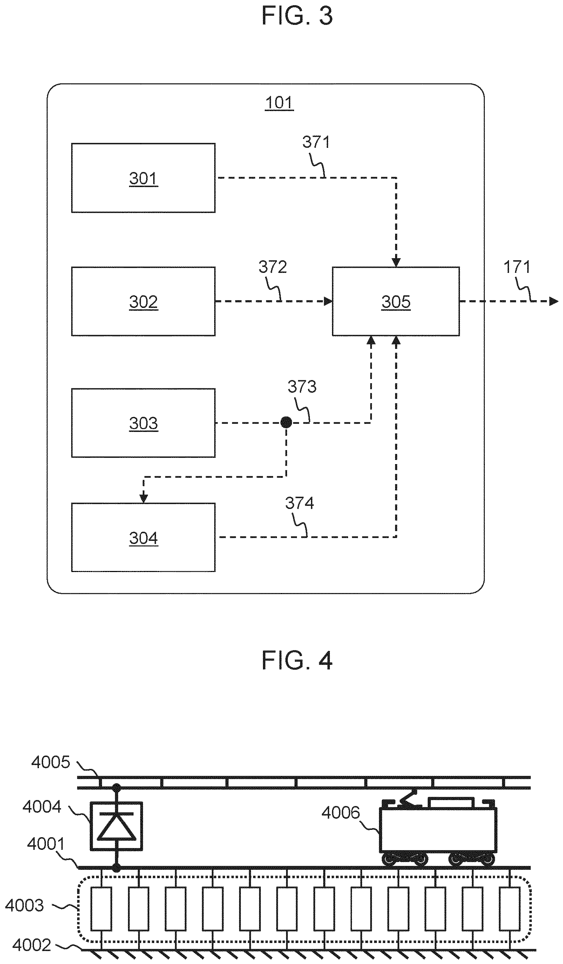

Fig. 3 is a diagram illustrating the internal configuration of the rail-to-ground voltage acquisition unit 101.

The rail-to-ground voltage acquisition unit 101 includes a rail-to-ground voltage measurement value acquisition unit 301, an equipment position acquisition unit 302, an own vehicle position acquisition unit 303, a rail-to-ground voltage waveform acquisition unit 304, and a rail-to-ground voltage calculation unit 305.

The rail-to-ground voltage measurement value acquisition unit 301 acquires a rail-to-ground voltage value measured by a rail-to-ground voltage measuring device installed on a line on which the own vehicle travels and outputs the rail-to-ground voltage measurement information 371 indicating the acquired rail-to-ground voltage value to the rail-to-ground voltage calculation unit 305. The rail-to-ground voltage measurement value may be acquired from the rail-to-ground voltage measuring device by wireless communication, or may be acquired by contact-type communication in which a signal current is passed through the rail for communication.

The equipment position acquisition unit 302 acquires a position $P_T$ of the power supply equipment such as a substation and a battery post and a position $P_V$ of the rail-to-ground voltage measuring device installed on the line on which the own vehicle travels, and then the equipment position acquisition unit 302 outputs equipment position information 372 indicating the positions $P_T$ and $P_V$ to the rail-to-ground voltage calculation unit 305. The positions $P_T$ and $P_V$ may be acquired from a database installed on the ground by wireless communication, contact communication, or the like, or the positions $P_T$ and $P_V$ may be stored in advance for each line in a data recording device mounted on the own vehicle and acquired from the data recording device.

The own vehicle position acquisition unit 303 acquires an own vehicle position (for example, the current position where the own vehicle is traveling or stopped) Po and outputs own vehicle position information 373 indicating the acquired position $P_O$ to the rail-to-ground voltage calculation unit 305. The own vehicle position may be estimated based on information obtained by Global Positioning System (GPS), may be estimated based on the mileage obtained by integrating the vehicle speed, or may be estimated based on a mark installed on a ground side such as a ground element, and any means may be used as long as the position of the own vehicle can be specified.

The rail-to-ground voltage waveform acquisition unit 304 receives the own vehicle position information 373 and outputs appropriate rail-to-ground voltage waveform information 374 according to the own vehicle position Po to the rail-to-ground voltage calculation unit 305. Processing of the rail-to-ground voltage waveform acquisition unit 304 will be described below.

The rail-to-ground voltage calculation unit 305 receives the rail-to-ground voltage measurement information 371, the equipment position information 372, the own vehicle position information 373, and the rail-to-ground voltage waveform information 374. Further, the rail-to-ground voltage calculation unit 305 calculates the rail-to-ground voltage in the vicinity of the own vehicle position Po and outputs the rail-to-ground voltage-related information 171 indicating a calculated rail-to-ground voltage $V_{RC}$ to the energy management unit 102.

Before explaining the rail-to-ground voltage waveform acquisition unit 304, first, the characteristics of the rail-to-ground voltage will be described with reference to Fig. 4.

Fig. 4 is a diagram illustrating an example of a model expressing an electrical connection relationship between a rail 4001 and a ground 4002.

Electric power is supplied from a substation 4004 to an own vehicle 4006 via an overhead line 4005. A large number of leak conductances 4003 are connected in parallel between the rail 4001 and the ground 4002. The leak conductance 4003 is an index showing the ease of current outflow from the rail 4001 to the ground 4002 and is represented by Siemens, which is the reciprocal of the electrical resistance. Since the rail 4001 is basically designed to be insulated, each leak conductance 4003 is an extremely small value. However, as the distance between the substation 4004 and the own vehicle 4006 increases, the amount of leak conductance 4003 connected in parallel increases, and the conductance increases, so that the return current tends to leak. As a result, some return currents will flow through the leak conductance and the ground rather than the rails.

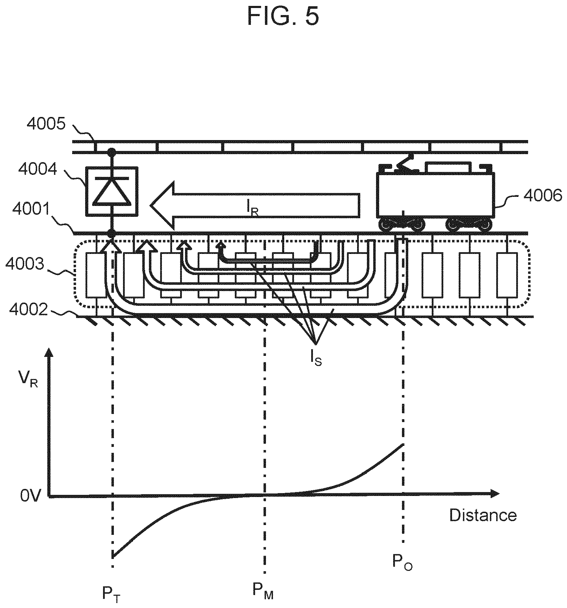

Fig. 5 is a diagram illustrating an example of flow of the return current and the rail-to-ground voltage in the model shown in Fig. 4.

When the value of leak conductance 4003 is about the same at every position, stray current $I_S$ flows out from the rail 4001 further on an own vehicle side than an intermediate position $P_M$ between the substation position $P_T$ and the own vehicle position Po and the stray current Is flows back to the rail 4001 on the substation side from the intermediate position $P_M$. For the sake of clarity, tips of arrows of the stray current $I_S$ are evenly arranged along the rail 4001, but in reality, they are concentrated near the substation position $P_T$.

Regarding the rail-to-ground voltage $V_R$, the voltage is higher than the voltage of the ground 4002 on the own vehicle side from the intermediate position $P_M$ and the stray current $I_S$ is returned to the rail 4001 on the substation side from the intermediate position $P_M$. Therefore, it is smaller than the voltage of the ground 4002.

The rail-to-ground voltage $V_R$ increases with distance from the substation 4004.

The tendency of the waveform of this rail-to-ground voltage does not change unless a physical property value of the ground 4002 changes significantly depending on the position. For example, even when the leak conductance 4003 becomes large as a whole due to rainfall or the like, the rail-to-ground voltage fluctuates in a similar manner, but the tendency of the waveform of the rail-to-ground voltage $V_R$ itself does not change.

However, in an actual railway line, the physical characteristics of the ground 4002 change greatly depending on the position and the waveform may not be symmetrical with respect to a center position between the substation and the train.

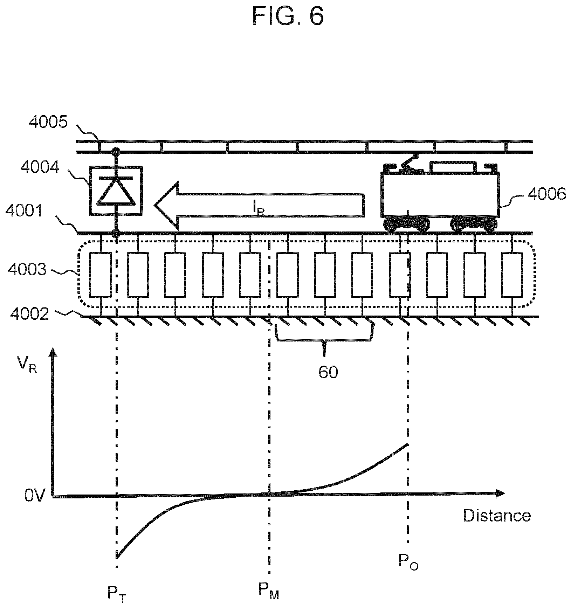

Fig. 6 is a diagram illustrating an example of a waveform of a rail-to-ground voltage when a position of the small leak conductance 4003 is included between the substation 4004 and the own vehicle 4006.

In the example of Fig. 6, in a portion 60 where the leak conductance is low, the current does not easily flow out from the rail 4001 to the ground 4002, so that the current leaking from the rail 4001 is generated even on the substation side from the intermediate position $P_M$, and thus the position where the sign of the rail-to-ground voltage $V_R$ changes also changes toward the substation. In this way, the tendency of the waveform of the rail-to-ground voltage $V_R$ changes depending on the leak conductance 4003 of the ground 4002 and the own vehicle position Po at that time. Therefore, the rail-to-ground voltage waveform acquisition unit 304 stores the tendency of the rail-to-ground voltage waveform for each own vehicle position $P_O$ calculated in advance by utilizing a simulation model or the like. The rail-to-ground voltage waveform acquisition unit 304 may store the result calculated by the simulation model as described above, or may be calculated every time by periodically inputting the own vehicle position $P_O$ into the simulation model installed on a computer of the own vehicle, and any means may be used as long as the tendency of the waveform of the rail-to-ground voltage can be obtained. As a method of holding the tendency of the waveform of the rail-to-ground voltage, it is desirable to hold it in a form like an equation, but any means may be used as long as it can express the tendency of the waveform. Information about the tendency of the waveform of the rail-to-ground voltage may be stored in a storage device (for example, at least one of a memory and an auxiliary storage device) (not illustrated). The storage device may be a device included in the drive system or a remote storage device. The "tendency of the waveform of the rail-to-ground voltage" may be a tendency (for example, the average of the one or more rail-to-ground voltage waveforms, or any rail-to-ground voltage waveform) obtained from one or more rail-to-ground voltage waveforms among one or a plurality of rail-to-ground voltage waveforms (for example, one or more rail-to-ground voltage waveforms obtained by running the simulation model one or more times for each own vehicle position) for each own vehicle position.

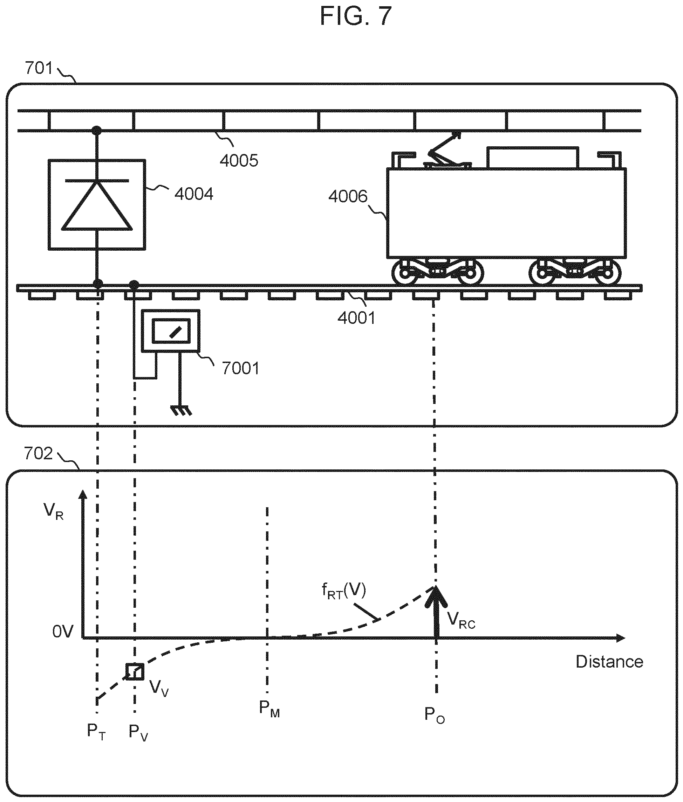

Fig. 7 is a diagram illustrating an example of rail-to-ground voltage calculation in the rail-to-ground voltage calculation unit 305.

Reference numeral 701 in Fig. 7 indicates a positional relationship between the substation 4004, a rail-to-ground voltage measuring device 7001, and the own vehicle 4006. A rail-to-ground voltage measuring device 7001 is connected between the substation 4004 and the own vehicle 4006. The rail-to-ground voltage measuring device 7001 is grounded to the ground and measures the rail-to-ground voltage $V_R$ as the ground voltage of the rail.

Reference numeral 702 indicates the status of the rail-to-ground voltage at each position on the line (rail 4001) indicated by the reference numeral 701. Depending on the relationship between the substation position $P_T$ and an own vehicle position $P_O$, $f_{RT}(V)$, which is a function indicating the tendency of the waveform, is selected. In this function, when the positional relationship between a substation position Pr and the own vehicle position $P_O$ changes, the function suitable for that position is selected again. In the example illustrated by the reference numeral 702, it is assumed that the function $f_{RT}(V)$ tends to reverse the positive and negative signs at the intermediate position $P_M$ of the substation position $P_T$ and the own vehicle position Po. $F_{RT}(V)$ shows the relationship between the voltage of the substation position $P_T$, the rail-to-ground voltage measuring device 7001, and the own vehicle position, and by inputting a rail-to-ground voltage measured value Vv of the rail-to-ground voltage measuring device 7001, the rail-to-ground voltage $V_{RC}$ at the own vehicle position is calculated.

In this way, by combining the tendency of the rail-to-ground voltage waveform and the value Vv measured by the rail-to-ground voltage measuring device 7001, even when the ground condition changes due to rainfall or the like, the rail-to-ground voltage $V_{RC}$ in the vicinity of the own vehicle position $P_O$ can be calculated by reflecting the environmental change. The own vehicle position Po is an example of a target position.

[Energy Management Unit 102]

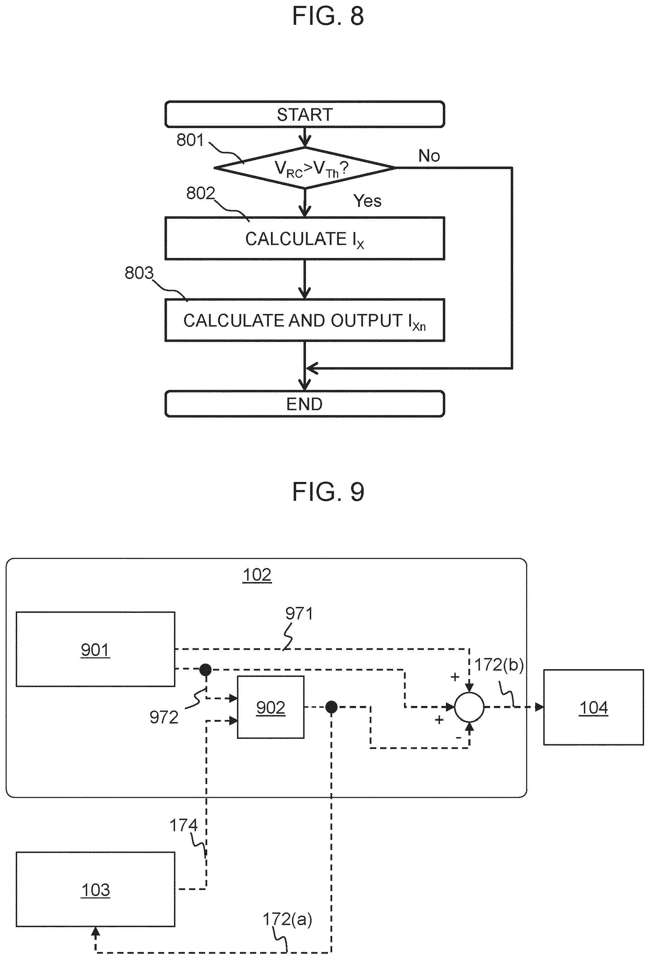

Fig. 8 is a diagram illustrating a processing flow of the energy management unit 102.

In Step 801, the energy management unit 102 determines $V_{RC} > V_{Th}$ (that is, whether the rail-to-ground voltage $V_{RC}$ exceeds a preset rail-to-ground voltage reference value $V_{Th}$). When $V_{RC} > V_{Th}$, the process proceeds to Step 802. When $V_{RC} \leq V_{Th}$, the processing flow ends. $V_{Th}$ indicates an upper limit of a reference range for the rail-to-ground voltage.

In Step 802, the energy management unit 102 calculates a current limit amount $I_X$ so that a difference between $V_{RC}$ and $V_{Th}$ becomes zero. Since the magnitude of the rail-to-ground voltage is proportional to own vehicle current $I_O$, the current limit amount $I_X$ can be calculated by the following equation. $I_X = I_O \times (1 - V_{Th} \div V_{RC})$

The own vehicle current $I_O$ uses the sum of the current values obtained from the auxiliary power usage status 174 and the drive power usage status 175. Not limited to this equation, for example, the energy management unit 102 may perform a simulation model on a computer mounted on the own vehicle 4006 based on $V_{Th}$ and $V_{RC}$ and calculate a stricter current limit amount $I_X$.

In Step 803, the energy management unit 102 calculates and outputs the current limit amount $I_{Xn}$ distributed to each device of the current limit amount $I_X$ for each of the auxiliary device power control device 103 and the drive power control device 104. That is, the energy management unit 102 distributes the current limit amount $I_X$ to the current limit amount $I_{X1}$ for the auxiliary device power control device 103 and $I_{X2}$ for the drive power control device 104 and outputs the usage current limit command information 172 indicating the distribution. The details of the process of Step 803 will be described below.

After executing the process of Step 803, the processing flow ends.

The rail-to-ground voltage reference value $V_{Th}$ in Step 801 may be set with a margin with respect to the upper limit value of the rail-to-ground voltage required by a standard or the like.

Fig. 9 is a diagram illustrating an example of the process of Step 803.

The energy management unit 102 includes a current limit calculation unit 901, a comparator 902, and a synthesizer 903. The current limit calculation unit 901 divides the current limit amount $I_X$ into a drive limit value (current limit value of drive power control device 104) 971 and an auxiliary device limit value (current limit value of auxiliary device power control device 103) 972 according to a predetermined reference and outputs each of them. Details of the drive limit value 971 and the auxiliary device limit value 972 will be described below.

As for the power limit value output from the current limit calculation unit 901, the drive limit value 971 is input to the synthesizer 903 and the auxiliary device limit value 972 is input to the comparator 902 and the synthesizer 903. The comparator 902 is configured so that the above-described auxiliary device usage current value (current value obtained from the auxiliary power usage status 174) is also input and compares the auxiliary device limit value 972 and the auxiliary device usage current value. As a result of comparison, the smaller value is output to the auxiliary device power control device 103 as the auxiliary device current limit command value 172(a) (see Fig. 2) and the positive or negative value is inverted and input to the synthesizer 903.

Therefore, the synthesizer 903 calculates the drive current limit command value 172 (b) by subtracting the auxiliary device current limit command value 172(a) from the sum of the drive limit value 971 and the auxiliary device limit value 972, and then the synthesizer 903 outputs the value to the drive power control device 104.

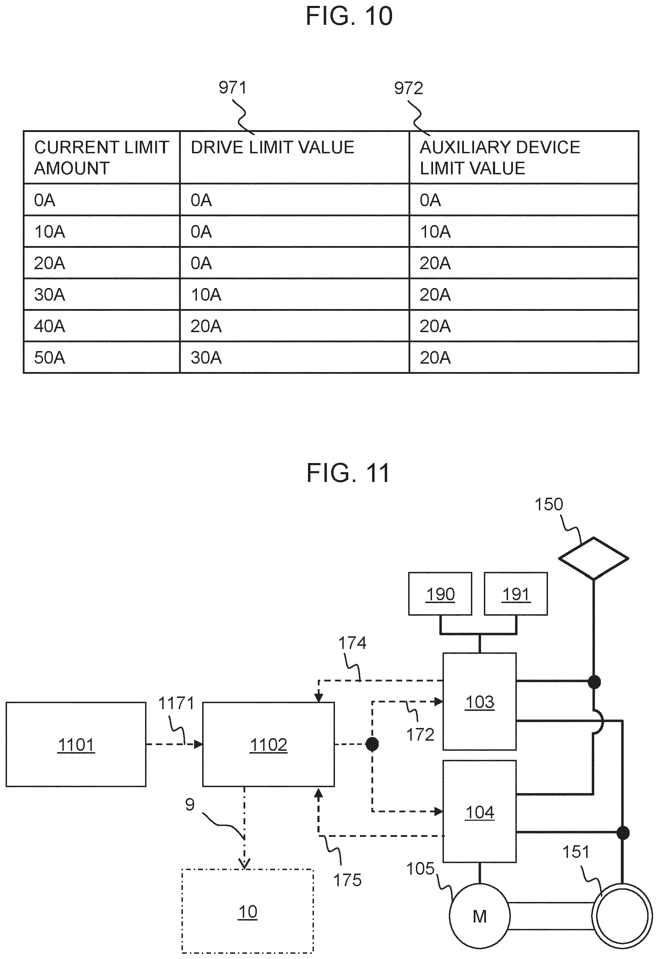

Fig. 10 is a diagram illustrating an example of the drive limit value 971 and the auxiliary device limit value 972 set by the current limit calculation unit 901. In the example illustrated in Fig. 10, up to 20A, the current limit amount $I_X$ is supported only by the current limit of the auxiliary device power control device 103, and when the current limit amount $I_X$ exceeds 20A, the current limit amount $I_{X2}$ of the drive power control device 104 increases.

According to Figs. 9 and 10, the auxiliary device current is limited as much as possible, and when the current limit amount $I_X$ exceeds the range, the excess is covered by the drive current limit. Therefore, it is possible to prevent the rail-to-ground voltage from rising excessively while suppressing the influence on the drive (typically, traveling of the own vehicle 4006).

In this example, an example in which the value of the current limit amount $I_X$ is distributed to the current limit amount $I_{X1}$ for the auxiliary device power control device 103 and the $I_{X2}$ for the drive power control device 104 is described. However, it is also possible to acquire the upper limit value of the current supplied from the overhead line to the own vehicle so that the rail-to-ground voltage $V_{RC}$ does not exceed the rail-to-ground voltage reference value $V_{Th}$ and distribute the upper limit value of the current to the drive power control device 104 and the auxiliary device power control device 103. That is, any means can be used as long as the drive power control device 104 and the auxiliary device power control device 103 can be controlled so that the rail-to-ground voltage $V_{RC}$ does not exceed the rail-to-ground voltage reference value $V_{Th}$.

Second Example

[Configuration of Railroad Vehicle Drive System]

Fig. 11 is a schematic configuration diagram of a railroad vehicle drive system according to a second example.

Since processing in a rail-to-ground voltage acquisition unit 1101 and processing in an energy management unit 1102 are different from those in the first example, the processing of both parts will be described below. The processing in the rail-to-ground voltage acquisition unit 1101 is different, and as a result, output rail-to-ground voltage-related information 1171 is different from the rail-to-ground voltage-related information 171 in the first example.

[Rail-to-ground Voltage Acquisition Unit 1101]

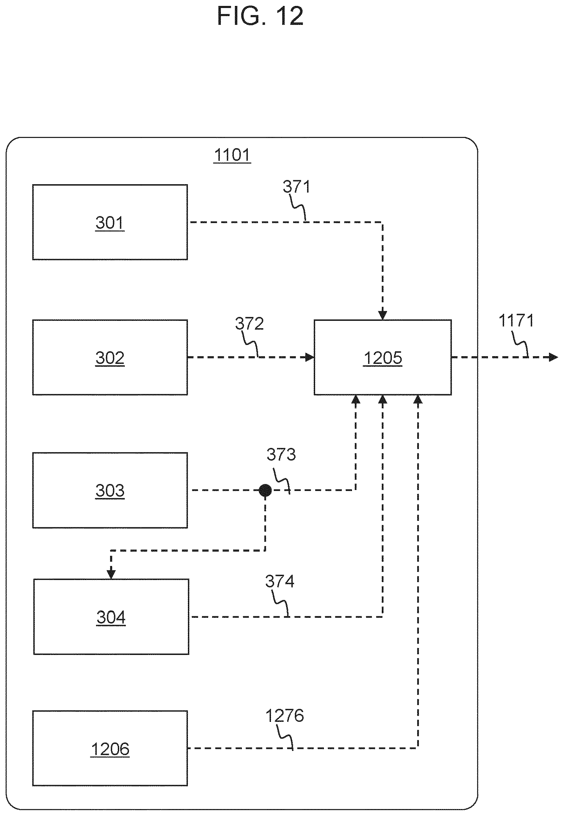

Fig. 12 is a diagram illustrating an internal configuration of the rail-to-ground voltage acquisition unit 1101.

The rail-to-ground voltage acquisition unit 1101 further includes an arbitrary position acquisition unit 1206. Except for the arbitrary position acquisition unit 1206, a rail-to-ground voltage calculation unit 1205, and the rail-to-ground voltage-related information 1171, it is the same as that in the first example, and thus the description thereof will be omitted.

The arbitrary position acquisition unit 1206 outputs arbitrary position information 1276, which is information about a preset arbitrary position, to the rail-to-ground voltage calculation unit 1205. The arbitrary position information 1276 includes information regarding an arbitrary position on the line for which an increase in the rail-to-ground voltage is desired to be suppressed. For example, the arbitrary position may be a position of any station or a position of any signal equipment (for example, important signal equipment).

The rail-to-ground voltage-related information 1171 contains information indicating a rail-to-ground voltage near an arbitrary position instead of a rail-to-ground voltage near the own vehicle position.

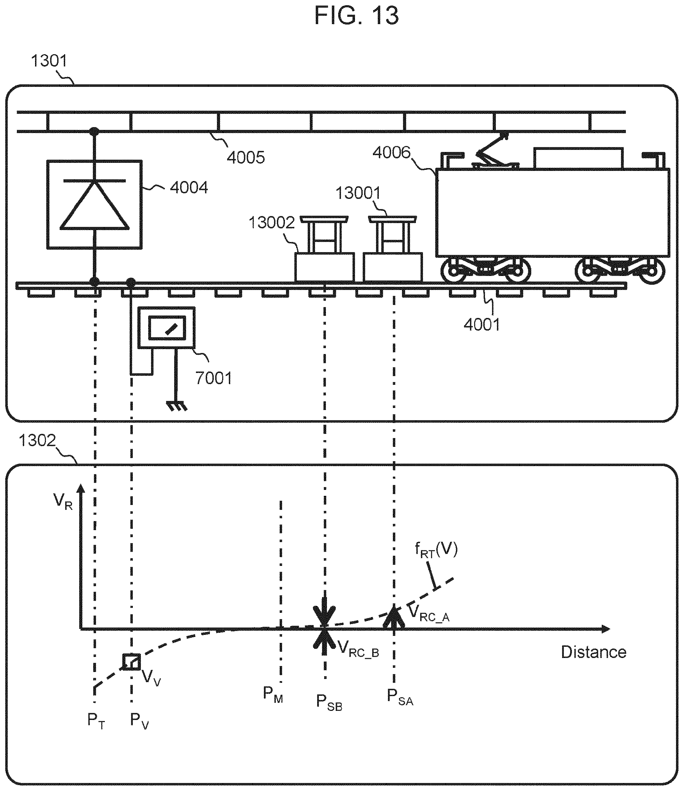

Fig. 13 is a diagram illustrating an example of rail-to-ground voltage calculation in the rail-to-ground voltage calculation unit 1205.

Reference numeral 1301 in Fig. 13 indicates a positional relationship between a substation 4004, a rail-to-ground voltage measuring device 7001, an own vehicle 4006, a station A 13001, and a station B 13002. A difference from the first example is that, instead of own vehicle position, the target position is an arbitrary position such as respective positions of the station A 13001 and the station B 13002 existing between the rail-to-ground voltage measuring device 7001 and the own vehicle 4006.

Reference numeral 1302 indicates a status of the rail-to-ground voltage at each position on a line (rail 4001) indicated by the reference numeral 1301. Depending on the relationship between the substation position $P_T$ and the own vehicle position Po, $f_{RT}(V)$, which is a function indicating the tendency of a waveform, is selected. In this function, when the positional relationship between the substation position $P_T$ and the own vehicle position Po changes, the function suitable for that position is selected again. In the example shown by the reference numeral 1302, it is assumed that the function $f_{RT}(V)$ tends to reverse the positive and negative signs at the intermediate position $P_M$ of the substation position $P_T$ and the own vehicle position $P_O$. The $f_{RT}(V)$ shows the relationship between the voltages of the substation position $P_T$, the rail-to-ground voltage measuring device 7001, the station A 13001, the station B 13002, and the own vehicle position, and by inputting the rail-to-ground voltage measured value Vv of the rail-to-ground voltage measuring device 7001, a rail-to-ground voltage $V_{RC\_A}$ at the station A 13001 and a rail-to-ground voltage $V_{RC\_B}$ at the station B 13002 are calculated.

In this way, by combining the tendency of the waveform of the rail-to-ground voltage and the rail-to-ground voltage measured value Vv, even when the ground conditions change due to rainfall or the like, the rail-to-ground voltage at any position can be calculated by reflecting the changes in the environment.

[Energy Management Unit 1102]

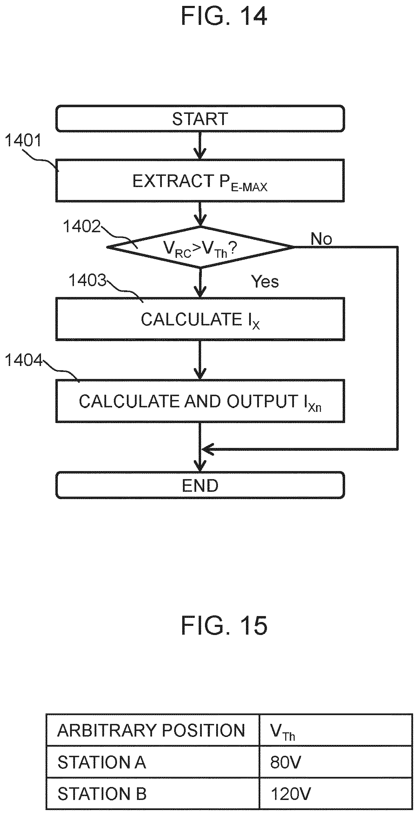

Fig. 14 is a diagram illustrating a processing flow of the energy management unit 1102.
In Step 1401, the energy management unit 1102 calculates an excess rate from a calculated rail-to-ground voltage $V_{RC\_x}$ and $V_{Th}$ (rail-to-ground voltage reference value) at any position for each arbitrary position, and then a position $P_{E-MAX}$ having the highest excess rate (x of $V_{RC\_x}$ depends on an arbitrary position) is acquired. The excess rate is calculated by the following equation.

$$\texttt{Excess rate} = (V_{RC\_x} \div V_{Th}) - 1$$

In Step 1402, the energy management unit 1102 determines whether $V_{RC\_x} > V_{Th}$ at the position $P_{E-MAX}$ having the highest excess rate. When $V_{RC\_x} > V_{Th}$, the process proceeds to Step 1403. When $V_{RC\_x} \leq V_{Th}$, the processing flow ends.
In Step 1403, the energy management unit 1102 calculates the current limit amount $I_X$ such that the difference between the rail-to-ground voltage $V_{RC\_x}$ and $V_{Th}$ at the position $P_{E-MAX}$ having the highest excess rate becomes zero. Since the calculation method in Step 1403 is the same as Step 802 of the first example and the process of Step 1404 is the same as that of Step 803 of the first example, the description thereof will be omitted.
The rail-to-ground voltage reference value $V_{Th}$ in Step 1402 may be set with a margin with respect to an upper limit value of the rail-to-ground voltage which must not actually be exceeded.
Fig. 15 is a diagram illustrating an example of a $V_{Th}$ setting method when there are a plurality of arbitrary positions.
When a plurality of arbitrary positions exist, different $V_{Th}$ may be set for each position. For example, since the station A has important signal equipment near the rail, the reference value $V_{Th}$ may be smaller than that of other stations so as not to cause dielectric breakdown.
The configuration of this example can prevent the rail-to-ground voltage from rising excessively at any position. Further, by performing Steps 1403 and 1404 with respect to the position $P_{E-MAX}$ having the highest excess rate, it can be expected that the rail-to-ground voltage will be equal to or less than $V_{Th}$ for the other arbitrary position.
In this example, an example in which the value of a current limit amount $I_X$ is distributed to a current limit amount $I_{X1}$ for the auxiliary device power control device 103 and $I_{X2}$ for the drive power control device 104 is described. However, an upper limit of the current supplied from the overhead line to the own vehicle may be acquired so that the rail-to-ground voltage $V_{RC}$ does not exceed the rail-to-ground voltage reference value $V_{Th}$

and the upper limit value of the current may be distributed to the drive power control device 104 and the auxiliary device power control device 103. That is, any means can be used as long as the drive power control device 104 and the auxiliary device power control device 103 can be controlled so that the rail-to-ground voltage $V_{RC}$ does not exceed the rail-to-ground voltage reference value $V_{Th}$.
In this example, a calculation example when the rail-to-ground voltage measuring device is installed between the substation and the train and the point where it is desired to suppress the rail-to-ground voltage is between the substation and the train is shown. However, for example, when a rail-to-ground voltage calculator is installed at a connection point between the substation and the rail and the potential at that position should not deviate from the range, the rail-to-ground voltage acquisition unit 1101 may acquire the voltage of the target rail-to-ground voltage measuring device and output it to the energy management unit 102. In that case, the rail-to-ground voltage acquisition unit 1101 illustrated in Fig. 12 does not necessarily have all of the illustrated configurations. For example, the rail-to-ground voltage acquisition unit 1101 has only the rail-to-ground voltage measurement value acquisition unit 301 and the rail-to-ground voltage measurement information 371 may be output as the rail-to-ground voltage-related information 1171.
In this example, since the rail-to-ground voltage at the own vehicle position is compared, the case where the rail-to-ground voltage reference value $V_{Th}$ is positive is described. However, for example, when calculating based on the value of the rail-to-ground voltage measuring device connected to the connection point between the substation and the rail, since the rail-to-ground voltage value becomes a negative value when the train travels, the rail-to-ground voltage reference value $V_{Th}$ may be set as a negative value. In that case, the concept of the calculation method of current limit amount $I_X$ is the same as the calculation method shown in the example and it may be calculated so as to fill the difference between the rail-to-ground voltage value and the rail-to-ground voltage reference value $V_{Th}$.

Third Example

[Configuration of Railroad vehicle drive system]

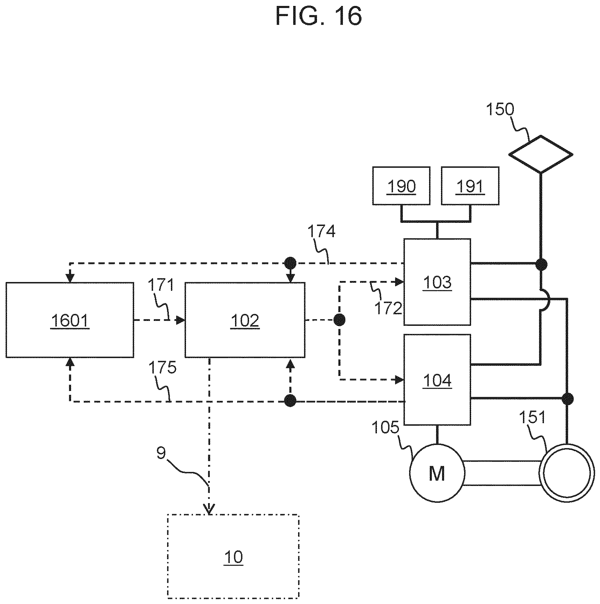

Fig. 16 is a schematic configuration diagram of a railroad vehicle drive system according to a third example.
The auxiliary power usage status 174 and the drive power usage status 175 are also input to a rail-to-ground voltage acquisition unit 1601. Therefore, the rail-to-ground voltage acquisition unit 1601 will be described and detailed description of other configurations will be omitted.

[Rail-to-ground Voltage Acquisition Unit 1601]

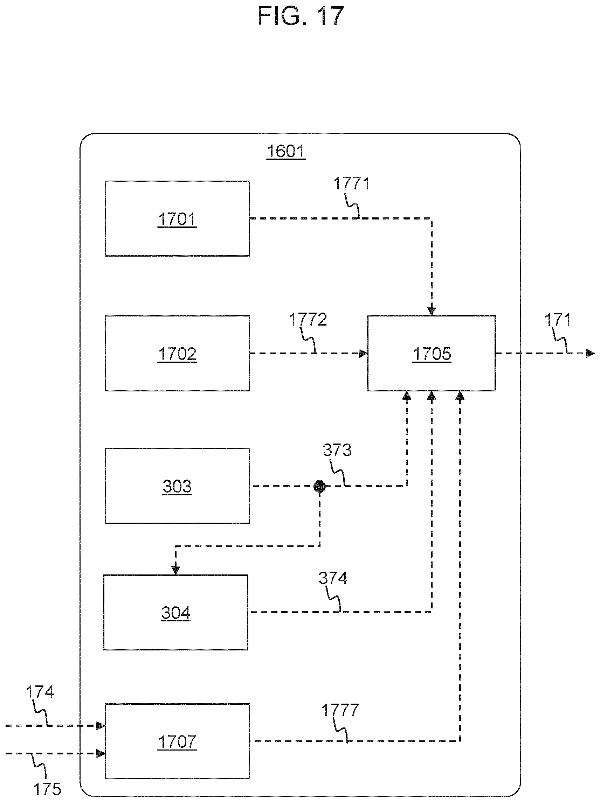

Fig. 17 is a diagram illustrating an internal configuration of the rail-to-ground voltage acquisition unit 1601.

The rail-to-ground voltage acquisition unit 1601 includes a feeder information acquisition unit 1701, an equipment voltage acquisition unit 1702, and an own vehicle power information acquisition unit 1707 instead of the rail-to-ground voltage measurement value acquisition unit 301 and the equipment position acquisition unit 302. Further, the rail-to-ground voltage calculation unit 1705 is different from that of the first example.

The feeder information acquisition unit 1701 acquires the position of the power supply equipment such as the substation and the battery post located on the line and the resistivity of the overhead line, and then the feeder information acquisition unit 1701 outputs feeder-related information 1771 including information indicating the acquired position and resistivity to the rail-to-ground voltage calculation unit 1705. Information such as the position of the power supply equipment and the resistivity of the overhead line may be acquired by communicating with a management center via wireless communication, or may be stored in advance in an information recording device in the train, and any means may be used as long as this information can be obtained. The details of the feeder-related information 1771 will be described below.

The equipment voltage acquisition unit 1702 outputs equipment voltage information 1772 including information indicating the voltage of the power supply equipment such as the substation and the battery post arranged on the line to the rail-to-ground voltage calculation unit 1705. The voltage of the power supply equipment may be acquired by communicating with each power supply equipment by wireless communication or the like, or the information may be acquired once at the management center or the like and then collectively acquired. Also, any means may be used as long as the voltage information of the power supply equipment can be obtained.

The own vehicle power information acquisition unit 1707 acquires the value of the power used by the own vehicle from the auxiliary power usage status 174 and the drive power usage status 175, and then the own vehicle power information acquisition unit 1707 outputs own vehicle power information 1777 including the acquired power value to the rail-to-ground voltage calculation unit 1705. The details of the own vehicle power information 1777 will be described below.

The rail-to-ground voltage calculation unit 1705 calculates the rail-to-ground voltage from the feeder-related information 1771, the equipment voltage information 1772, the own vehicle position information 373, the rail-to-ground voltage waveform information 374, and the own vehicle power information 1777, and then the rail-to-ground voltage-related information 171 including the information indicating the calculated rail-to-ground voltage is output to the energy management unit 102.

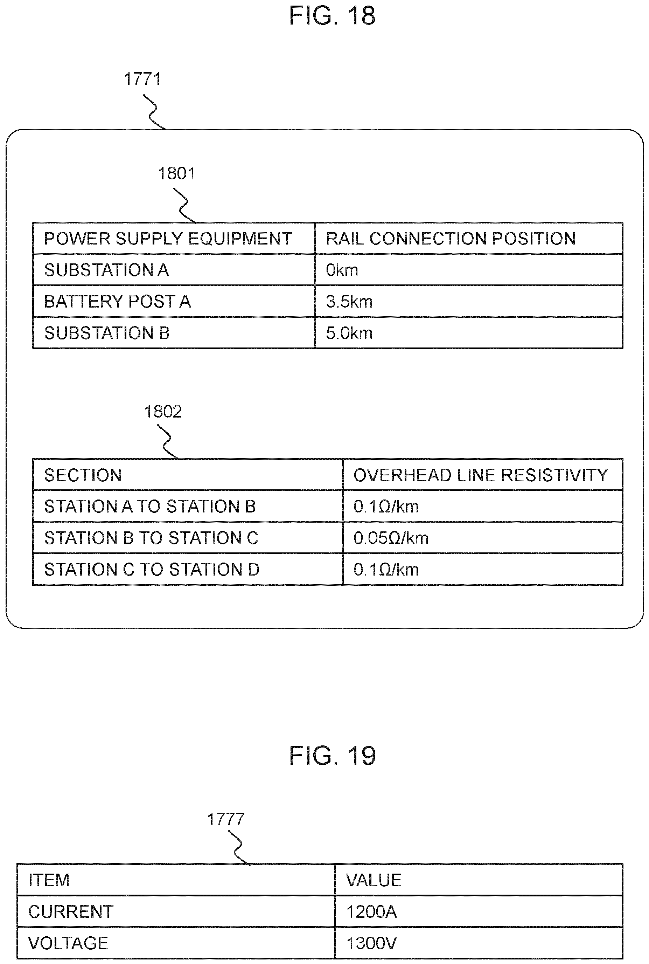

Fig. 18 is a diagram illustrating an example of the feeder-related information 1771.

The feeder-related information 1771 includes substation position information 1801 and overhead line resistivity information 1802. The substation position information 1801 is information indicating a rail connection position of the power supply equipment installed on the line. The overhead line resistivity information 1802 is information indicating the overhead line resistivity for each section. In the example illustrated in Fig. 18, the overhead line resistivity is different for each section. This assumes that two overhead lines are arranged in parallel in a section with many trains such as a trunk line. In this case, the overhead lines are electrically connected in parallel, so the overhead line resistivity is halved. By setting the overhead line resistivity for each section in this way, the rail-to-ground voltage can be calculated with high accuracy. In the example illustrated in Fig. 18, the value is set for each station, but the section may be arbitrarily divided by a distance or the like.

Fig. 19 is a diagram illustrating an example of the own vehicle power information 1777.

The own vehicle power information 1777 includes a value obtained by adding respective current values obtained from the auxiliary power usage status 174 and the drive power usage status 175 for the current. Further, the own vehicle power information 1777 may include the voltage value of either one of the voltage value acquired from the auxiliary power usage status 174 and the voltage value acquired from the drive power usage status 1675 with respect to the voltage, or may include an average value of each voltage. The own vehicle power information 1777 is an example of information indicating the own vehicle power, which is a current and a voltage defining the power supplied to the own vehicle from the overhead line.

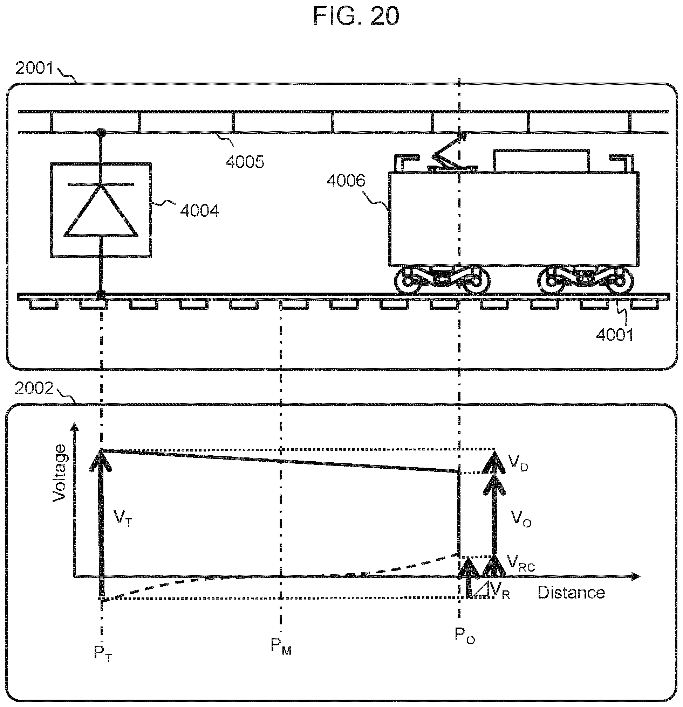

Fig. 20 is a diagram illustrating an example of rail-to-ground voltage calculation in the rail-to-ground voltage calculation unit 1705. Reference numeral 2001 in Fig. 20 indicates a positional relationship between the substation 4004 and the own vehicle 4006. Reference numeral 2002 is a diagram illustrating a state of the rail-to-ground voltage at each position on the line (rail 4001) indicated by the reference numeral 2001. A rail-to-ground voltage calculation method in the reference numeral 2002 will be described.

Assuming that a difference between a substation voltage $V_T$ at the substation position $P_T$ and an own vehicle voltage $V_O$ at the own vehicle position $P_O$ is $\Delta V_R$, $\Delta V_R$ can be obtained by the following equation.

$$\Delta V_R = V_T - (V_D + V_O)$$

Here, $V_T$ is obtained from the equipment voltage information 1772 and $V_O$ is obtained from the own vehicle power information 1777. $V_D$ is the voltage drop due to the overhead line resistor. The substation voltage $V_T$ is defined as the potential at the connection point between the substation 4004 and the overhead line 4005 with reference to the contact point between the substation 4004 and the rail 4001. $V_D$ is calculated by the following equation.

$$V_D = I_O \times R_L$$

$I_O$ is the own vehicle current and is obtained from the own vehicle power information 1777. $R_L$ is the overhead line resistance value and is calculated by the following equation.

$$R_L = \rho_L \times L_{TO}$$

$\rho_L$ is the resistivity of the overhead line, which is obtained from the overhead line resistivity information 1802 in the feeder-related information 1771. $L_{TO}$ is the distance between the substation position $P_T$ and the own vehicle position $P_O$ and is the difference between the substation position $P_T$ obtained from the feeder-related information 1771 and the own vehicle position $P_O$.

In the example of Fig. 20, a function $f_{RT2}(\Delta V)$ which indicates the tendency of the waveform of the rail-to-ground voltage, which is selected according to the relationship between the substation position $P_T$ and the own vehicle position Po, shows the relationship between the voltage of the substation position $P_T$, the rail-to-ground voltage measuring device 7001, and the own vehicle position, and the rail-to-ground voltage $V_{RC}$ at the own vehicle position is calculated by inputting $\Delta V_R$, which is the difference between the substation voltage $V_T$ at the substation position $P_T$ and the own vehicle voltage $V_O$ at the own vehicle position $P_O$.

According to the configuration of this example, even on the line where no rail-to-ground voltage measuring device is installed, it is possible to predict the rail-to-ground voltage and prevent the rail-to-ground voltage from rising excessively.

In this example, an example in which the value of the current limit amount $I_X$ is distributed to the current limit amount $I_{X1}$ for the auxiliary device power control device 103 and $I_{X2}$ for the drive power control device 104 is described. However, the upper limit value of the current supplied from the overhead line to the own vehicle may be obtained so that the rail-to-ground voltage $V_{RC}$ does not exceed the rail-to-ground voltage reference value $V_{Th}$ and the upper limit value of the current may be distributed to the drive power control device 104 and the auxiliary device power control device 103. That is, any means can be used as long as the drive power control device 104 and the auxiliary device power control device 103 can be controlled so that the rail-to-ground voltage $V_{RC}$ does not exceed the rail-to-ground voltage reference value $V_{Th}$.

Fourth Example

[Configuration of Railroad Vehicle Drive System]

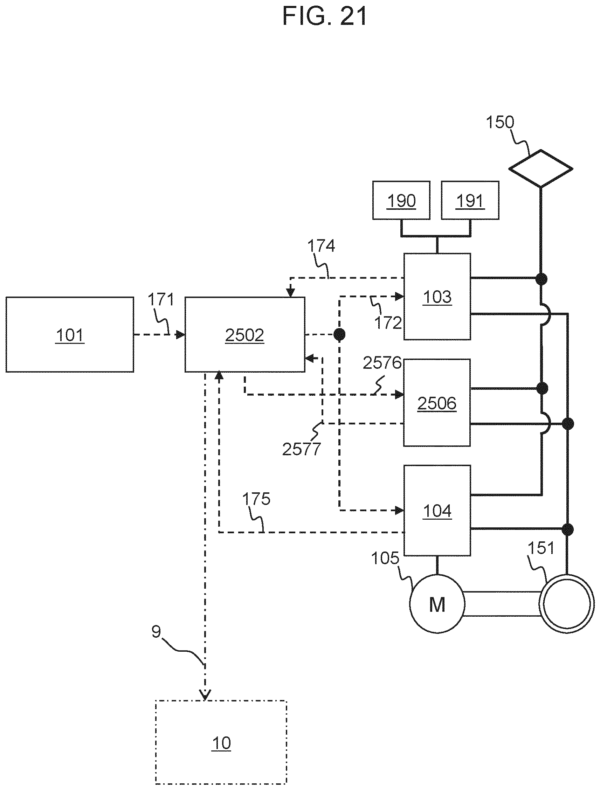

Fig. 21 is a schematic configuration diagram of a railroad vehicle drive system according to a fourth example.

The railroad vehicle drive system illustrated in Fig. 21 includes a power storage device 2506 in addition to the elements described in the first example. The configuration is the same as that of the railroad vehicle drive system shown in the first example, except that the power storage device 2506 is added and the energy management unit 2502 accompanying the power storage device 2506 is compatible with the power storage device 2506. Therefore, it will be described that it is related to the power storage device 2506 and the energy management unit 2502 and other detailed description will be omitted. The power storage device 2506 is an example of a power supply device.

The power storage device 2506 is electrically connected to the auxiliary device power control device 103 and the drive power control device 104. The power storage device 2506 changes charge and discharge current according to a discharge current command value 2576 from the energy management unit 2502. Further, the power storage device 2506 outputs power storage device status information 2577 including the remaining capacity (State Of Charge. Hereinafter, SOC) of the power storage device and the temperature of the power storage device to the energy management unit 2502.

The power storage device 2506 may be a chemical battery such as a lithium ion battery, or may be a method of converting power energy into rotational energy of a flywheel and storing it, and any means may be used as long as the power can be stored.

[Energy Management Unit 2502]

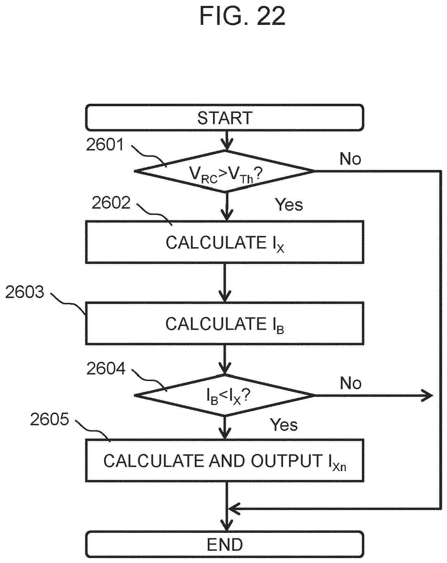

Fig. 22 is a diagram illustrating a processing flow of the energy management unit 2502.

In Step 2601, the energy management unit 2502 determines whether $V_{RC} > V_{Th}$. When $V_{RC} > V_{Th}$, the process proceeds to Step 2602. When $V_{RC} \leq V_{Th}$, the processing flow ends.

In Step 2602, the energy management unit 2502 calculates the current limit amount $I_X$ such that the difference between $V_{RC}$ and $V_{Th}$ becomes zero.

In Step 2603, based on the SOC and the power storage device temperature information included in the power storage device status information 2577, the energy management unit 2502 determines a discharge current amount $I_B$ so that the current limit amount can be satisfied within the range that the power storage device 2506 can output and outputs the discharge current command value 2576 indicating the determined discharge current amount $I_B$ to the power storage device 2506.

In Step 2604, the energy management unit 2502 determines whether $I_B < I_X$.

When $I_B < I_X$ (that is, when the discharge current amount $I_B$ calculated in Step 2603 is smaller than the current limit amount $I_X$), Step 2605 is performed. Furthermore, it is necessary to reduce the power supply from the overhead line. Since the processing in Step 2605 is the same as Step 803 described in the first example, detailed description thereof will be omitted. However, the value (current limit amount) specified as the current limit command value is a value calculated based on $I_X$ and $I_B$, for example, a difference between $I_X$ and $I_B$. That is, since the power is supplied from the power storage device 2506, the limited amount of current can be suppressed.

When $I_B \geq I_X$, the processing flow ends.

The rail-to-ground voltage reference value $V_{Th}$ in Step 2601 may be set with a margin with respect to the upper limit value of the rail-to-ground voltage that must not actually be exceeded.

According to the configuration of this example, it is possible to prevent the rail-to-ground voltage near the own vehicle from rising excessively while reducing the limit amount of auxiliary power and drive power of the own vehicle (in other words, while maintaining passenger service).

In this example, an example in which the value of the current limit amount $I_X$ is distributed to the current limit amount $I_{X1}$ for the auxiliary device power control device 103 and $I_{X2}$ for the drive power control device 104 is described. However, the upper limit value of the current supplied from the overhead line to the own vehicle may be acquired so that the rail-to-ground voltage $V_{RC}$ does not exceed the rail-to-ground voltage reference value $V_{Th}$ and the upper limit value of the current may be distributed to the drive power control device 104 and the auxiliary device power control device 103. That is, any means can be used as long as the drive power control device 104 and the auxiliary device power control device 103 can be controlled so that the rail-to-ground voltage $V_{RC}$ does not exceed the rail-to-ground voltage reference value $V_{Th}$.

Fifth Example

[Configuration of Railroad Vehicle Drive System]

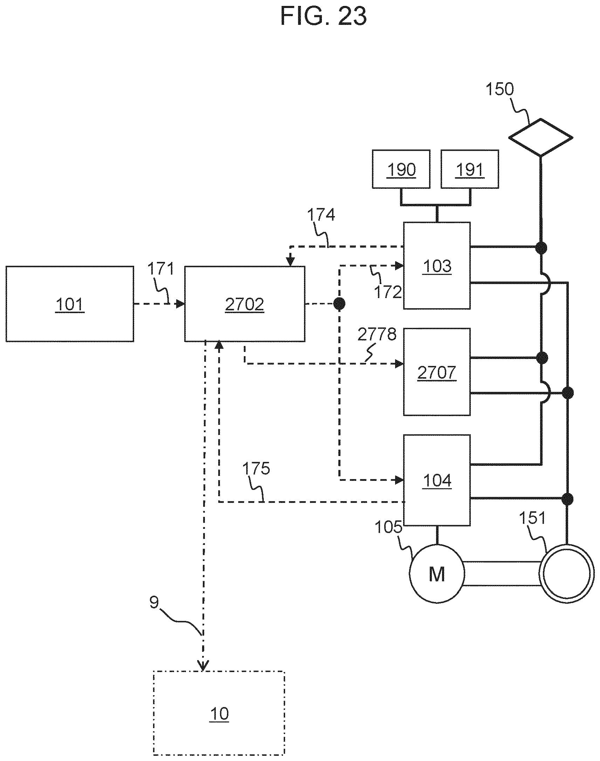

Fig. 23 is a schematic configuration diagram of a railroad vehicle drive system according to a sixth example.

The railroad vehicle drive system illustrated in Fig. 23 includes a power generation device 2707 in addition to the elements described in the first example. The configuration is the same as that of the railroad vehicle drive system shown in the first example, except that the power generation device 2707 is added and the energy management unit 2702 accompanying the power generation device 2707 is compatible with the power generation device 2707. Therefore, it will be described that it is related to the power generation device 2707 and the energy management unit 2702 and the other detailed description will be omitted. The power generation device 2707 is an example of a power supply device.

The power generation device 2707 is electrically connected to the auxiliary device power control device 103 and the drive power control device 104. The power generation device 2707 controls the power generation current by a power generation current command value 2778 from the energy management unit 2702.

As the power generation device 2707, a combustion type prime mover such as a diesel engine combined with a motor generator device may be used, or a device which directly generates electricity by a chemical reaction such as a fuel cell may be used, and any means may be used as long as the energy source supplied from the outside is converted into electric power.

[Energy Management Unit 2702]

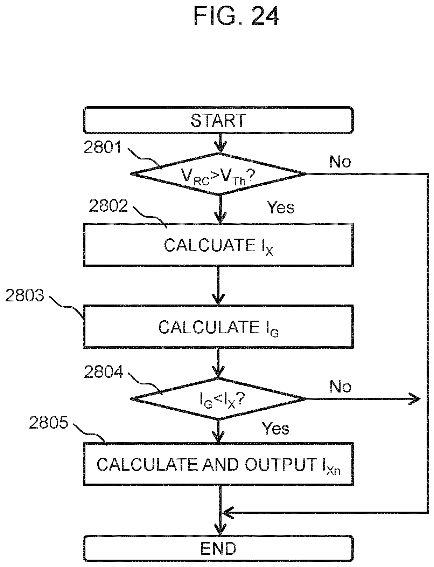

Fig. 24 is a diagram illustrating a processing flow of the energy management unit 2702.

In Step 2801, the energy management unit 2502 determines whether $V_{RC} > V_{Th}$. When $V_{RC} > V_{Th}$, the process proceeds to Step 2802. When $V_{RC} \leq V_{Th}$, the processing flow ends.

In Step 2802, the energy management unit 2502 calculates the current limit amount $I_X$ such that the difference between $V_{RC}$ and $V_{Th}$ becomes zero.

In Step 2803, the energy management unit 2502 determines a power generation current amount $I_G$ within the range in which the power generation device 2707 can output and outputs the power generation current command value 2778 indicating the determined $I_G$ to the power generation device 2707.

In Step 2804, the energy management unit 2502 determines whether $I_G < I_X$.

When $I_G < I_X$ (that is, when the generation current $I_G$ amount calculated in Step 2803 is smaller than the current limit amount $I_X$), Step 2605 is performed. Furthermore, it is necessary to reduce the power supply from the overhead line. Since the processing in Step 2605 is the same as Step 803 described in the first example, detailed description thereof will be omitted. However, the value (current limit amount) specified as the current limit command value follows the difference between $I_X$ and $I_G$. That is, since there is power supply from the power generation device 2707, the limited amount of current can be suppressed.

When $I_G \geq I_X$, the processing flow ends.

The rail-to-ground voltage reference value $V_{Th}$ in Step 2801 may be set with a margin with respect to the upper limit value of the rail-to-ground voltage which must not actually be exceeded.

According to the configuration of this example, it is possible to prevent the rail-to-ground voltage in the vicinity of the own vehicle from rising excessively while reducing the limit amount of the auxiliary power and the driving power of the own vehicle (in other words, while maintaining maximum passenger service). In addition to the power generation device 2707, the power storage device 2506 may also be adopted. In other words, both the power generation device 2707 and the power storage device 2506 may be installed as the power supply device.

In this example, an example in which the value of the current limit amount $I_X$ is distributed to the current limit amount $I_{X1}$ for the auxiliary device power control device 103 and $I_{X2}$ for the drive power control device 104 is described. However, the upper limit of the current supplied from the overhead line to the own vehicle may be obtained so that the rail-to-ground voltage $V_{RC}$ does not exceed the rail-to-ground voltage reference value $V_{Th}$ and the upper limit value of the current may be distributed to the drive power control device 104 and the auxiliary device power control device 103. That is, any means can be used as long as the drive power control device 104 and the auxiliary device power control device 103 can be controlled so that the rail-to-ground voltage $V_{RC}$ does not exceed the rail-to-ground voltage reference value $V_{Th}$.

Sixth Example

[Configuration of Railroad Vehicle Drive System]

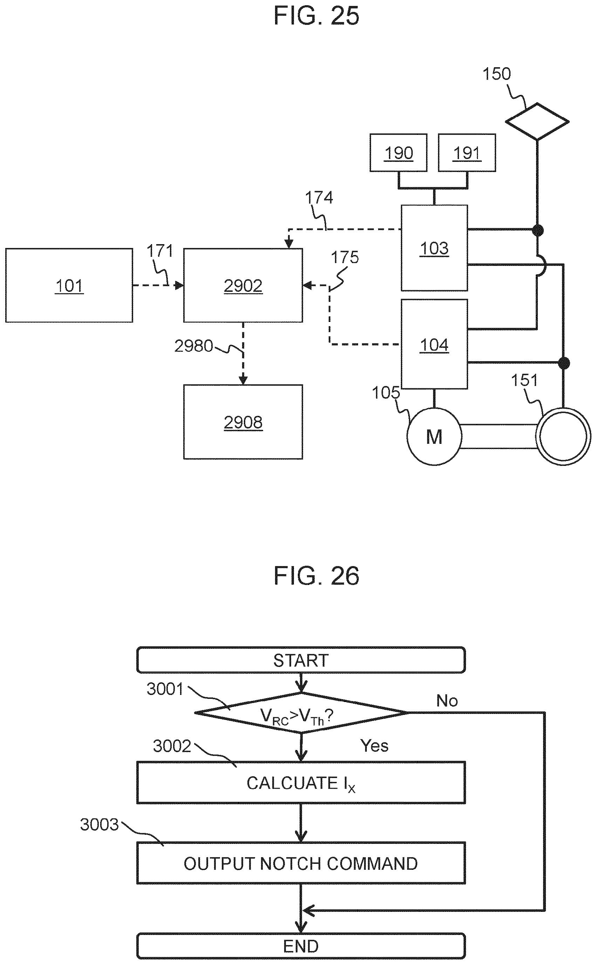

Fig. 25 is a schematic configuration diagram of a railroad vehicle drive system according to a sixth example.

The railroad vehicle drive system illustrated in Fig. 25 includes a crew instruction unit 2908 in addition to the elements described in the first example. The configuration is the same as that of the railroad vehicle drive system shown in the first example, except that the crew instruction unit 2908 is added and an energy management unit 2902 accompanying the crew instruction unit 2908 is compatible with the crew instruction unit 2908. Therefore, it will be described that it is related to the crew instruction unit 2908 and the energy management unit 2902 and other detailed description will be omitted.

The crew instruction unit 2908 receives driving operation command information 2980 and notifies the crew of the driving operation command indicated by the driving operation command information 2980. That is, the driving operation command information 2980 may be an example of command information which limits the use of the current corresponding to the current limit amount with respect to the power control device. The driving operation command information 2980 may be information indicating the content of the driving operation which restricts the use of the current for the calculated current limit amount with respect to the power control device and the command for performing the driving operation. The crew instruction unit 2908 may notify the crew of the driving operation instruction by voice, or may notify by visual information such as displaying on a monitor or lighting an instructed notch portion. Also, any means may be used as long as the crew can recognize the instructed driving operation.

[Energy Management Unit 2902]

Fig. 26 is a diagram illustrating a processing flow of the energy management unit 2902.

In Step 3001, the energy management unit 2502 determines whether $V_{RC} > V_{Th}$. When $V_{RC} > V_{Th}$, the process proceeds to Step 3002. When $V_{RC} \leq V_{Th}$, the processing flow ends.

In Step 3002, the energy management unit 2502 calculates the current limit amount $I_X$ such that the difference between $V_{RC}$ and $V_{Th}$ becomes zero.

In Step 3003, the energy management unit 2502 acquires an upper limit notch capable of traveling while maintaining the current limit amount $I_X$ and outputs driving operation command information 2980 indicating the acquired upper limit notch. The drive current at each notch may be calculated in advance and held, or may be calculated from the status of the drive power control device at that time. Also, any means may be used as long as the drive current value of each notch can be obtained.

The rail-to-ground voltage reference value $V_{Th}$ in Step 3001 may be set with a margin with respect to the upper limit value of the rail-to-ground voltage which must not actually be exceeded.

With the configuration of this example, without changing the control logic inside the drive power control device 104 (and auxiliary device power control device 103), it is possible to prevent the rail-to-ground voltage near the own vehicle from rising excessively. In particular, it can be expected that, when the crew performs the driving operation according to the notified driving operation command, the auxiliary device power control device 103 and the drive power control device 104 perform the same control as the control according to the usage current limit command information 172. Therefore, it is possible to prevent the rail-to-ground voltage in the vicinity of the own vehicle from rising excessively.

In this example, an example in which the value of the current limit amount $I_X$ is distributed to the current limit amount $I_{X1}$ for the auxiliary device power control device 103 and $I_{X2}$ for the drive power control device 104 is described. However, the upper limit of the current supplied from the overhead line to the own vehicle may be acquired so that the rail-to-ground voltage $V_{RC}$ does not exceed the rail-to-ground voltage reference value $V_{Th}$ and the upper limit value of the current may be distributed to the drive power control device 104 and the auxiliary device power control device 103. That is, any means can be used as long as the drive power control device 104 and the auxiliary device power control device 103 can be controlled so that the rail-to-ground voltage $V_{RC}$ does not exceed the rail-to-ground voltage reference value $V_{Th}$.

[Supplementary Information]

Although the invention describes the examples in the DC feeder system, it can be expected that the same effect can be obtained even when the same technique is applied to the AC-feeder-type railroad system. Further, the invention can be applied to other types of railroad vehicles, such as monorails which run on rubber tires, in addition to railroad vehicles in which electricity is collected from the overhead line by a pantograph, consumed by a motor or the like, and then electricity is returned in the order of wheel -> rail -> substation. Therefore, the rail-to-ground voltage acquisition unit 101 can perform the following processing. That is, the rail-to-ground voltage acquisition unit 101 acquires an equipment position, which is a position of the power supply equipment, acquires a vehicle position, which is a position of at least one of the railroad vehicles on the rail, acquires equipment current, which is overhead line sending current or returning current of at least one of the power supply equipment (that is, the equipment current may be the current sent to the overhead line or the current returned from the return line), acquires vehicle current, which is current supplied from the overhead line to at least one of the railroad vehicles or flowing out to a return line, acquires a return resistance property, which is at least one of an electrical resistance property value and a leakage resistance property of a structure and the ground, including at least the rail, and calculates a rail-to-ground voltage for the target position (for example, own vehicle position, or one or more arbitrary positions other than own vehicle) based on the equipment position, the vehicle position, the equipment current, the own vehicle current, and the return resistance property.

Further, in the example, an example of preventing the deviation of the rail-to-ground voltage value which occurs when the train travels by power is described. However, it is also possible to prevent the deviation of the rail-to-ground voltage value that occurs when the train regenerates. In that case, the power returned to the overhead line can be adjusted by consuming excess power generated to suppress the deviation of the rail-to-ground voltage value by increasing auxiliary device power consumption or driving power, charging the power storage device, engine braking, or the like, or by weakening the regenerative brake.

The invention is not limited to the examples described above and includes various modifications within the range not deviating from the gist thereof. For example, the invention is not limited to the one including all the configurations described in the above-described embodiment and includes the one in which a part of the configurations is deleted. In addition, not all configurations need to be installed in the railroad vehicle, and when the functions can be satisfied, some functions may be installed on the ground and linked with the equipment on the railroad vehicle by wireless communication or the like. Further, it is possible to add or replace a part of the configuration according to one embodiment with the configuration according to another embodiment.

Reference Signs List

101: rail-to-ground voltage acquisition unit
102: energy management unit
103: auxiliary device power control device
104: drive power control device

**Claims**

1. A railroad vehicle which is operated by power supplied from power supply equipment, comprising:

   a power control system which takes in information on a ground voltage of a rail at a target position as one of parameters and executes power control based on the information; and
   at least one of a drive device supplied with power controlled by the power control system and an auxiliary device supplied with power controlled by the power control system.

2. The railroad vehicle according to claim 1, further comprising:

   a rail-to-ground voltage acquisition unit which acquires a rail-to-ground voltage, which is a ground voltage of the rail at the ground position; and
   an energy management unit which calculates a current limit amount, which is a limited current amount, based on the acquired rail-to-ground voltage and the predetermined reference value when the acquired rail-to-ground voltage deviates from a predetermined range, generates command information which limits use of current for the current limit amount with respect to the power control system, and outputs the generated command information.

3. The railroad vehicle according to claim 2, wherein the rail-to-ground voltage acquisition unit,
   acquires a rail-to-ground voltage measured value from a rail-to-ground voltage measuring device installed on the rail,
   acquires a measurement position, which is a position of the rail-to-ground voltage measuring device, and an equipment position, which is a position of the power supply equipment,
   acquires an own vehicle position, which is a position of the railroad vehicle,
   acquires a waveform tendency which is a tendency of a rail-to-ground voltage waveform for each position of the railroad vehicle, and
   calculates a rail-to-ground voltage for the target position based on the measurement position, the equipment position, the own vehicle position, and the waveform tendency.

4. The railroad vehicle according to claim 2, wherein the rail-to-ground voltage acquisition unit, acquires feeder-related information, which is information about a position of the power supply equipment and overhead line resistance, acquires an own vehicle position, which is a position of the railroad vehicle, acquires an equipment voltage, which is a voltage of the power supply equipment, acquires own vehicle power, which is current and voltage defining power supplied to the railroad vehicle from the overhead line, acquires a waveform tendency which is a tendency of a rail-to-ground voltage waveform for each position of the railroad vehicle, and calculates the rail-to-ground voltage for the target position based on the feeder-related information, the own vehicle position, the equipment voltage, the own vehicle power, and the waveform tendency.

5. The railroad vehicle according to claim 2, wherein the rail-to-ground voltage acquisition unit, acquires an equipment position, which is a position of the power supply equipment, acquires a vehicle position, which is a position of at least one of the railroad vehicles on the rail, acquires equipment current, which is overhead line sending current or returning current of at least one of the power supply equipment, acquires vehicle current, which is current supplied from the overhead line to at least one of the railroad vehicles or flowing out to a return line, acquires a return resistance property, which is at least one of an electrical resistance property value and a leakage resistance property of a structure and the ground, including at least the rail, and calculates a rail-to-ground voltage for the target position based on the equipment position, the vehicle position, the equipment current, the own vehicle current, and the return resistance property.

6. The railroad vehicle according to claim 2, wherein the power control system includes, an auxiliary device power control device which controls power of an auxiliary device of the railroad vehicle, and a drive power control device which controls power of drive equipment of the railroad vehicle, and the energy management unit distributes the current limit amount to at least one of the auxiliary device power control device and the drive power control device.

7. The railroad vehicle according to claim 2, further comprising:

a power supply device, wherein the energy management unit generates the command information when a supply current amount of the power supply device is smaller than the calculated current limit amount, and the calculated current limit amount is a difference between the supply current amount and a current limit amount according to a difference between the acquired rail-to-ground voltage and the predetermined reference value.

8. The railroad vehicle according to claim 7, wherein the power supply device is at least one of a power storage device and a power generation device.

9. The railroad vehicle according to claim 2, wherein the command information is information indicating a content of a driving operation which limits use of current corresponding to the calculated current limit amount with respect to the power control system and a command for performing the driving operation.

10. The railroad vehicle according to claim 6, wherein the current limit amount is distributed to the auxiliary device power control device, and a difference between a certain amount and the current limit amount is distributed to the drive power control device when the current limit amount exceeds the certain amount.

11. The railroad vehicle according to claim 2, wherein the energy management unit generates notification information indicating a vehicle condition as a predicted or actual result of control according to the command information and outputs the generated notification information.

12. The railroad vehicle according to any one of claims 1 to 11, wherein the target position is an own vehicle position, which is a position of the railroad vehicle, or one or more arbitrary positions other than the own vehicle.

13. The railroad vehicle according to claim 12, wherein in a plurality of arbitrary positions, the target position is an arbitrary position corresponding to a rail-to-ground voltage having a highest excess rate with respect to the reference value among a plurality of rail-to-ground voltages corresponding to the plurality of arbitrary positions.

14. A power control method for a railroad vehicle which is operated by power supplied from power supply equipment, comprising:

taking in information on a ground voltage of a rail at a target position as one of parameters; and executing power control of at least one of a drive device and an auxiliary device in the railroad vehicle based on the information.

# FIG. 1

# FIG. 2

172

| COMMAND TARGET DEVICE | CURRENT LIMIT COMMAND VALUE | |
|---|---|---|
| AUXILIARY DEVICE POWER CONTROL DEVICE | 10A | 172(a) |
| DRIVE POWER CONTROL DEVICE | 60A | 172(b) |

# FIG. 3

# FIG. 4

# FIG. 5

# FIG. 6

# FIG. 7

701

4005

4004

4006

4001

7001

702

$V_R$

$f_{RT}(V)$

$V_{RC}$

0V

Distance

$V_V$

$P_T$ $P_V$ $P_M$ $P_O$

# FIG. 8

# FIG. 9

# FIG. 10

| CURRENT LIMIT AMOUNT | DRIVE LIMIT VALUE | AUXILIARY DEVICE LIMIT VALUE |
|---|---|---|
| 0A | 0A | 0A |
| 10A | 0A | 10A |
| 20A | 0A | 20A |
| 30A | 10A | 20A |
| 40A | 20A | 20A |
| 50A | 30A | 20A |

# FIG. 11

# FIG. 12

FIG. 13

# FIG. 14

```
          ┌─────────────────────────────┐
          │            START            │
          └─────────────────────────────┘
                        │
                        ▼
1401      ┌─────────────────────────────┐
          │       EXTRACT P_{E-MAX}      │
          └─────────────────────────────┘
                        │
                        ▼
1402            ╱───────────────╲               No
            ╱   V_{RC} > V_{Th}?   ╲───────────────┐
            ╲                    ╱                 │
                ╲───────────────╱                  │
                        │ Yes                      │
                        ▼                          │
1403      ┌─────────────────────────────┐         │
          │       CALCULATE I_X          │         │
          └─────────────────────────────┘         │
                        │                          │
                        ▼                          │
1404      ┌─────────────────────────────┐         │
          │  CALCULATE AND OUTPUT I_{Xn} │         │
          └─────────────────────────────┘         │
                        │                          │
                        ▼◄─────────────────────────┘
          ┌─────────────────────────────┐
          │             END             │
          └─────────────────────────────┘
```

# FIG. 15

| ARBITRARY POSITION | $V_{Th}$ |
|---|---|
| STATION A | 80V |
| STATION B | 120V |

# FIG. 16

## FIG. 17

## FIG. 18

1771

1801

| POWER SUPPLY EQUIPMENT | RAIL CONNECTION POSITION |
|---|---|
| SUBSTATION A | 0km |
| BATTERY POST A | 3.5km |
| SUBSTATION B | 5.0km |

1802

| SECTION | OVERHEAD LINE RESISTIVITY |
|---|---|
| STATION A TO STATION B | 0.1Ω/km |
| STATION B TO STATION C | 0.05Ω/km |
| STATION C TO STATION D | 0.1Ω/km |

## FIG. 19

1777

| ITEM | VALUE |
|---|---|
| CURRENT | 1200A |
| VOLTAGE | 1300V |

# FIG. 20

# FIG. 21

# FIG. 22

START

2601 — $V_{RC} > V_{Th}$? — No

Yes

2602 — CALCULATE $I_X$

2603 — CALCULATE $I_B$

2604 — $I_B < I_X$? — No

Yes

2605 — CALCULATE AND OUTPUT $I_{Xn}$

END

FIG. 23

FIG. 24

```
                    ┌─────────────────────────┐
                    │          START          │
                    └─────────────────────────┘
                                 │
2801 ─┐              ◇─────────────────────◇        No
       └─────────── <    V_RC > V_Th ?      >─────────────┐
                     ◇─────────────────────◇              │
                                 │ Yes                     │
2802 ─┐              ┌─────────────────────────┐          │
       └──────────── │      CALCUATE I_X       │          │
                     └─────────────────────────┘          │
                                 │                         │
2803 ─┐              ┌─────────────────────────┐          │
       └──────────── │      CALCULATE I_G      │          │
                     └─────────────────────────┘          │
                                 │                         │
2804 ─┐              ◇─────────────────────◇        No     │
       └─────────── <      I_G < I_X ?      >───────────►  │
                     ◇─────────────────────◇              │
                                 │ Yes                     │
2805 ─┐   ┌───────────────────────────────────┐          │
       └──│  CALCULATE AND OUTPUT I_Xn        │          │
          └───────────────────────────────────┘          │
                                 │                         │
                                 │◄────────────────────────┘
                    ┌─────────────────────────┐
                    │          END            │
                    └─────────────────────────┘
```

# FIG. 25

# FIG. 26

START

3001 — $V_{RC} > V_{Th}$? — No

Yes

3002 — CALCUATE $I_X$

3003 — OUTPUT NOTCH COMMAND

END

## INTERNATIONAL SEARCH REPORT

| International application No. |
| --- |
| PCT/JP2019/037836 |

**A. CLASSIFICATION OF SUBJECT MATTER**
Int.Cl. B60L9/18(2006.01)i, B60L1/00(2006.01)i, B60M3/02(2006.01)i
According to International Patent Classification (IPC) or to both national classification and IPC

**B. FIELDS SEARCHED**

Minimum documentation searched (classification system followed by classification symbols)
Int.Cl. B60L9/18, B60L1/00, B60M3/02

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 61-278436 A (MITSUBISHI ELECTRIC CORP.) 09 December 1986, entire text, all drawings (Family: none) | 1-14 |
| A | JP 8-40116 A (MITSUBISHI ELECTRIC CORP.) 13 February 1996, entire text, all drawings (Family: none) | 1-14 |
| A | JP 2003-48465 A (MITSUBISHI ELECTRIC CORP.) 18 February 2003, entire text, all drawings (Family: none) | 1-14 |

☒ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 November 2019 (29.11.2019) | 10 December 2019 (10.12.2019) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2019/037836

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-260963 A (RAILWAY TECHNICAL RESEARCH INSTITUTE) 15 September 2003, entire text, all drawings (Family: none) | 1-14 |
| A | CN 103481793 A (NATIONAL UNIVERSITY OF DEFENCE TECHNOLOGY) 01 January 2014, entire text, all drawings (Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2003260963 A